## Europäisches Patentamt
## European Patent Office
## Office européen des brevets

(11) Numéro de publication: **0 071 492**
**A1**

# DEMANDE DE BREVET EUROPEEN

(21) Numéro de dépôt: **82401121.7**

(22) Date de dépôt: **18.06.82**

(51) Int. Cl.³: **G 02 B 17/00**
**G 02 B 13/06**

(30) Priorité: **23.06.81 FR 8112298**

(43) Date de publication de la demande:
**09.02.83 Bulletin 83/6**

(84) Etats contractants désignés:
**AT BE CH DE GB IT LI NL SE**

(71) Demandeur: **THOMSON-CSF**
**173, Boulevard Haussmann**
**F-75379 Paris Cedex 08(FR)**

(72) Inventeur: **Zachary, Alain**
**THOMSON-CSF SCPI 173, bld Haussmann**
**F-75379 Parsi Cedex 08(FR)**

(74) Mandataire: **Eisenbeth, Jacques Pierre et al,**
**THOMSON-CSF SCPI 173, Bld Haussmann**
**F-75379 Paris Cedex 08(FR)**

(54) **Dispositif de surveillance panoramique optique.**

(57) Dispositif de surveillance panoramique optique, capable de surveiller l'espace aérien dans un angle solide de site important comportant essentiellement une surface réfléchissante parabolique (5) transmettant une image dudit secteur (SE), sur un support d'observation sous la forme d'un anneau circulaire dont les cercles limites (6-60) sont les images des rayons extrêmes du secteur. Variante dans laquelle la surface réfléchissante est constituée par le solide (7) engendré par la portion utile (AB) de la surface parabolique, tournant autour d'un axe (BD) passant par un des points extrêmes (B) de ladite portion définie par l'angle de site nul.

Application aux dispositifs de surveillance de l'espace aérien.

FIG_ 3

Croydon Printing Company Ltd.

EP 0 071 492 A1

1

# DISPOSITIF DE SURVEILLANCE PANORAMIQUE OPTIQUE

La présente invention a pour objet un dispositif de surveillance panoramique optique.

Un tel dispositif est destiné à donner une image optique de l'espace aérien dans un angle d'azimut de 360° et dans un angle de site important pouvant atteindre une quarantaine de degrés. D'une façon plus précise un tel dispositif doit être capable de faire l'acquisition d'objectifs aériens de façon optique et rapidement.

L'acquisition d'objectifs aériens dans l'espace peut être faite à l'aide d'un radar, mais dans les cas où ce radar n'est pas en fonctionnement pour une raison quelconque, le dispositif suivant l'invention peut le remplacer à titre d'appareil de secours ; il peut également servir d'assistance à la veille optique pour des systèmes passifs.

Actuellement pour effectuer une surveillance optique d'objectifs aériens, on équipe les tourelles où les opérateurs sont logés, de verrières ou de lunettes panoramiques.

Dans le cas de verrière, trois opérateurs disposés de façon à surveiller chacun un secteur de 120° est une solution acceptable du problème. Toutefois certaines contraintes limitent ce nombre à deux opérateurs surveillant chacun un secteur de 180° ce qui présente des difficultés.

La surveillance de l'espace à l'aide de lunettes panoramiques est difficile si l'on retient que la probabilité pour qu'un point quelconque de l'espace équivalent à un balayage radar, soit 360° en gisement et 35° en site, soit dans le champ d'une lunette de grossissement 2, n'est que de 5,2 %. On notera de plus que l'acquisition en site pour un avion de combat dure en général de 2 à 4 secondes pendant lesquelles l'avion a parcouru de 600 à 1200 mètres.

Un autre dispositif d'observation omnidirectionnelle est connue par le brevet français 2 147 762 dont on donne une représentation schématique figure 1.

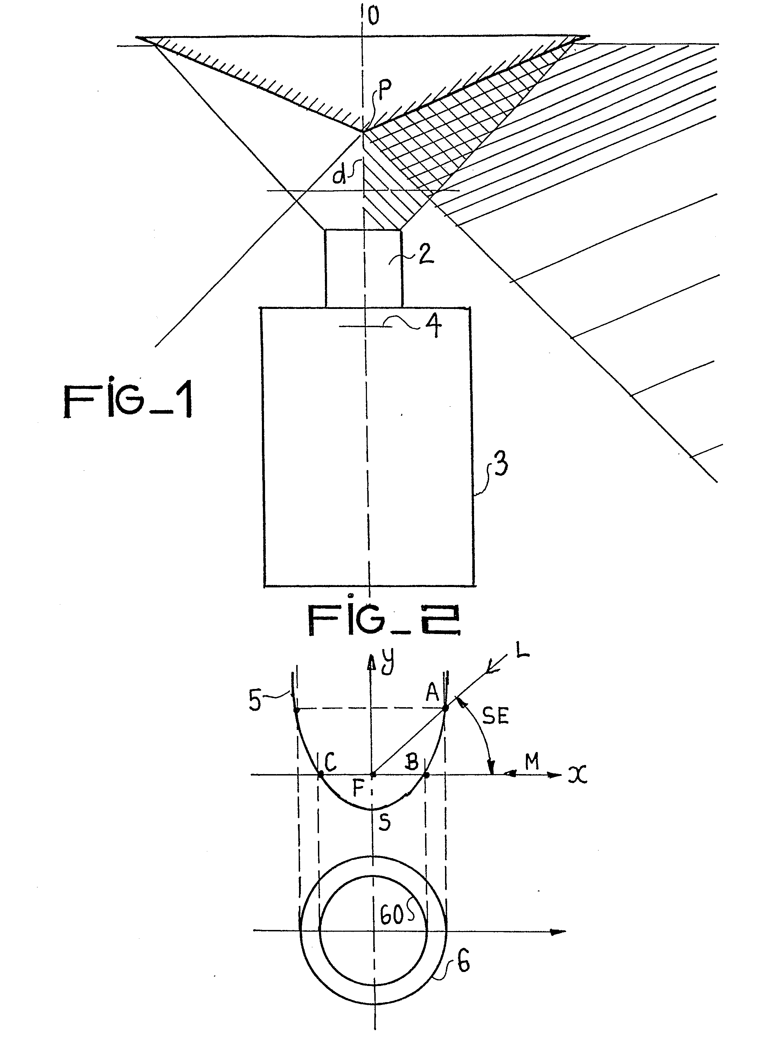

Une surface réfléchissante 1 plus particulièrement conique est disposée, la pointe dirigée vers le bas, sur l'axe et au-dessus d'un appareil d'observation 3 en l'occurrence une caméra de télévision dont on a représenté très schématiquement l'objectif 2 et le transducteur 4. La référence 5 indique le champ de résolution observé dont le dispositif va donner une image plane panoramique. Pour pouvoir donner une image de l'espace, le dispositif de la figure 1 est monté sur un mât, mais il est néanmoins peu approprié à la surveillance de l'espace aérien dans un site de l'ordre de 35° ; de plus, il n'est pas stigmatique.

Le but de l'invention est de définir un dispositif de surveillance panoramique optique de l'espace aérien comportant un élément optique réfléchissant transmettant une image de l'espace à un support plan où l'on peut l'observer.

Suivant l'invention un dispositif de surveillance panoramique optique comportant une surface réfléchissante transmettant l'image d'un point de l'espace à un support d'observation est caractérisé en ce que la surface optique réfléchissante est une surface parabolique ou une portion de celle-ci, placée de façon à intercepter le secteur circulaire solide à observer.

D'autres avantages et caractéristiques de l'invention apparaîtront au cours de la description d'un exemple de réalisation d'un dispositif de surveillance panoramique optique donné à l'aide des figures qui représentent outre la figure 1 donnant un exemple d'un art antérieur :

- la figure 2, une représentation de principe du dispositif suivant l'invention ;

- la figure 3, une vue schématique du dispositif suivant l'invention.

Ainsi que cela a été envisagé dans l'introduction à la présente description, l'invention a pour but de définir un dispositif de surveillance panoramique optique de l'espace aérien, permettant à un seul observateur d'évaluer la menace aérienne dans un angle de gisement de 360° et dans un angle de site de l'ordre de 40°, c'est-à-dire en fait d'obtenir une image au moins comparable à celle que lui donnerait, avec un matériel plus lourd ou plus coûteux, un radar de surveillance, pour des systèmes "diurnes-temps clairs".

La figure 2 représente le principe du dispositif suivant l'invention. On considère une parabole 5 de foyer F qui devient le point origine des coordonnées $F_x$ et $F_y$, $F_x$ étant la trace du plan horizontal et $F_y$ celle du plan vertical. Le repère $F_x$, $F_y$ représente en coupe l'espace aérien à surveiller dans lequel on a défini une direction FL faisant un angle de l'ordre de 30 à 40° avec la trace horizontale $F_x$. L'angle $F_x$, FL est la représentation plane de l'angle solide en site de l'espace à surveiller. La parabole 5 réfléchissante à la propriété de transmettre suivant un rayon parallèle à son axe tout rayon venant de l'infini qui frappe sa surface et qui se dirige vers le foyer. L'image de l'espace aérien compris dans l'angle de site θ est donc un anneau circulaire. L'angle de site subit de la sorte une transformation pratiquement linéaire dans le domaine considéré, il est donc conservé entre les deux cercles correspondant aux rayons limites LA et MB gradués en valeur d'angle de site. Par contre, il y a un défaut dans la représentation du gisement.

On constate cependant que la partie de la parabole CB, située au-dessous de l'axe $F_x$ n'est pas utilisée, la même menace aérienne ne pouvant être détectée au-dessous de l'horizon. On constate également suivant la figure 2 que l'image de la portion de l'espace surveillée est concentrée dans l'anneau circulaire qui a été défini.

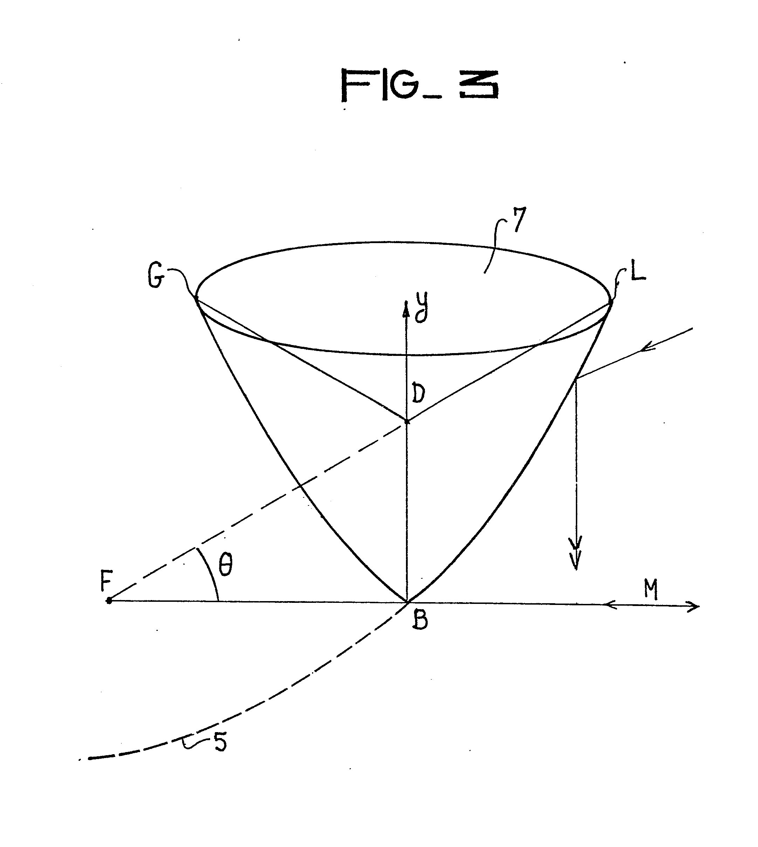

La figure 3 représente de façon schématique comment est réalisé le miroir réfléchissant parabolique suivant l'invention. La référence 5 indique la trace d'une parabole semblable à celle de la figure 2. Tenant compte de ce qui a été dit précédemment à propos de la figure 2, on ne considère que la partie AB de la parabole découpée dans la parabole 5 par les rayons extrêmes LAF et MBF. Cette partie constitue ce que l'on peut appeler la partie utile de la parabole. Pour obtenir la surface réfléchissante totale, donnant une image sur 360° en gisement de l'espace à surveiller, on fait tourner le secteur parabolique BDA autour de l'axe BD parallèle à l'axe $F_y$.

Le solide de révolution ABG (7) a une surface réfléchissante parabolique embrassant dans un angle de site de l'ordre de 30° tout l'espace sur 360° en gisement.

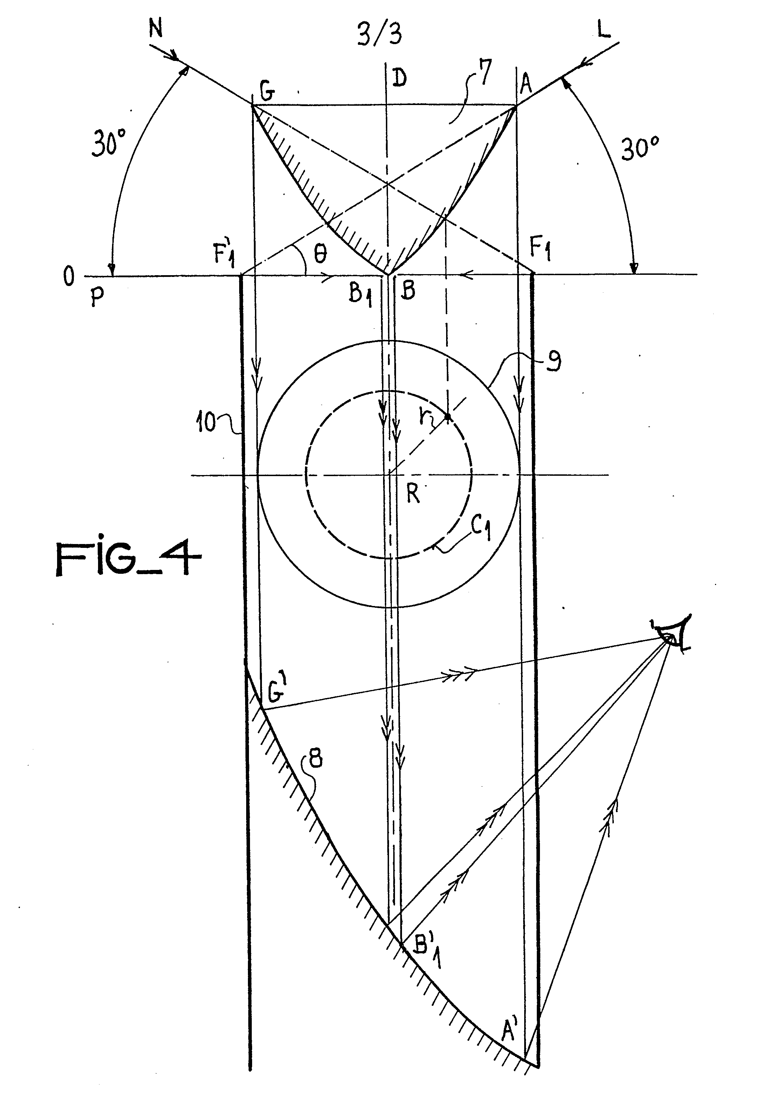

La figure 4 représente schématiquement en coupe le dispositif complet de surveillance panoramique optique suivant l'invention.

Ce dispositif comprend la surface réfléchissante parabolique 7, conforme à celle définie figure 3, et un miroir parabolique 8 de courbure différente de solide de révolution 7. En O se trouve l'observateur, là où l'image de l'espace peut être observée.

Le fonctionnement du dispositif de la figure 4 est le suivant. L'image de tout point de l'espace situé dans l'angle de site $\theta$ est projetée parallèlement à l'axe BD. Sur la figure on n'a représenté que les points situés sur les rayons limites. Ainsi le rayon LA se réfléchit suivant la direction AA', le rayon MB suivant BB', NG suivant GG' et $PB_1$ suivant $PB'_1$. En accord avec la propriété citée de la parabole, toutes ces directions AA', BB', $B_1 B'_1$ et GG' sont parallèles. Rapportée à la figure 2 l'image de l'espace n'est alors plus un anneau circulaire, mais un disque schématisé en 9. Pour obtenir une image exploitable, on dispose un miroir parabolique 8 dont le foyer est en Q. Les rayons parallèles précités frappant le miroir parabolique 8 sont réfléchis en Q où se forme l'image observable par l'observateur.

Le miroir parabolique 8 peut être une lentille. En Q on peut disposer une lunette bioculaire, ou tout autre système de prise de vue (éventuellement caméra infra-rouge).

Pour ce qui concerne l'exploitation de l'image on peut noter que suivant l'invention, en définissant l'organe réfléchissant de base transformant l'angle solide surveillé en un faisceau cylindrique de rayons parallèles dont la section par un plan orthogonal contient l'image, cette image est sur le disque 9.

A grande distance, les cibles étant à site très bas apparaissent au voisinage du centre R du disque 9 représentant le site 0.

Une cible piquant à site constant en direction du foyer de système parabolique reste à l'intersection d'une radiale r, correspondant à un gisement, et du cercle correspondant au site constant. L'image de cette cible grossit au fur et à mesure qu'elle se rapproche.

Si la cible, se déplace à site constant en conservant son altitude, son image tourne sur le cercle de site correspondant sans changer de taille.

Du point de vue de la réalisation pratique, la trace MP peut représenter le toit d'une tourelle, sur laquelle est fixé le miroir parabolique 7.

Le miroir optique 8 est dispose dans un tube 10 dont il constitue le fond.

On a ainsi décrit un dispositif de surveillance panoramique optique.

## REVENDICATIONS

1. Dispositif de surveillance panoramique optique comportant une surface réfléchissante transmettant l'image d'un point de l'espace sur un support d'observation, caractérisé en ce que cette surface réfléchissante (5) est une parabole ou une portion de parabole, placée de façon à intercepter tout rayon venant d'un secteur circulaire solide à surveiller (SE).

2. Dispositif de surveillance suivant la revendication 1, caractérisé en ce que le secteur à surveiller (SE) découpe dans la surface parabolique réfléchissante (5) une portion utile (AB) et que le sommet dudit secteur étant confondu avec le foyer F de la surface parabolique, l'image du secteur à surveiller apparaît sur le support d'observation sous la forme d'un anneau circulaire centré sur l'axe ($F_y$) de la parabole, les cercles limites (6-60) de cet anneau étant déterminés par les rayons extrêmes (LA, MB) du secteur, correspondant respectivement aux valeurs minimale et maximale des angles de site limitant le secteur circulaire solide à surveiller (SE).

3. Dispositif de surveillance, suivant la revendication 2, caractérisé en ce que la surface réfléchissante utilisée est constituée par la seule partie utile (AB, CD) découpée par le secteur circulaire solide à surveiller, cette surface étant le solide de révolution généré par la portion de surface utile (AB) tournant autour d'un axe passant par le point B intersection de l'axe $F_x$ et de la surface parabolique (5).

4. Dispositif de surveillance suivant la revendication 3, caractérisé en ce que l'image du secteur à surveiller apparaît sur le support d'observation sous la forme d'un disque centré sur l'axe (DB (B1)) du solide de révolution, le centre correspondant au site 0 et la circonférence du disque (9) correspondant à l'angle de site maximal (LA FY) du secteur à surveiller, les gisements étant représentés par les rayons (r) de ce disque (9).

5. Dispositif de surveillance suivant la revendication 4, caractérisé en ce qu'il comprend, en combinaison, un solide de révolution (7) dont la surface réfléchissante est parabolique et embrasse sensiblement l'angle solide du secteur circulaire solide (S) à surveiller, l'axe (BD) dudit solide étant sensiblement perpendiculaire au plan (PM) définissant l'angle de site nul, portant les foyers (F $F_1$) des portions de parabole définissant ledit solide, un miroir parabolique (8) de courbure différente de celle de la surface réfléchissante (5) dont le foyer (Q) est disposé de façon à permettre l'observation de l'image du secteur à surveiller par un observateur.

6. Dispositif de surveillance panoramique destiné à l'évaluation de la menace aérienne, dans un secteur déterminé de l'espace embrassant un angle d'au moins une quarantaine de degrés, conformément à l'une quelconque des revendications 1 à 5.

0071492

FIG_1

FIG_2

# FIG. 3

FIG_4

## Office européen
des brevets

## RAPPORT DE RECHERCHE EUROPEENNE

**0071492**
Numéro de la demande

EP  82 40 1121

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 02 B 17/00 |
| X | AT-B- 256 502 (VISOPHONE) *Page 2, lignes 8-41; figures 1-3* | 1,2,5 | G 02 B 13/06 |
| | --- | | |
| A | FR-A-1 466 434 (R.NARBAITS-JAUREGUY) *Résumé; figures 4-6* | 1 | |
| | --- | | |
| A | US-A-3 286 590 (A.P.BRUEGGEMANN) *Revendications* | 1 | |
| | --- | | |
| A | CH-A- 456 186 (M.M.SHAFIK) *Revendications; figures* | 1 | |
| | ----- | | |

| DOMAINES TECHNIQUES RECHERCHES (Int. Cl. ³) |
|---|
| G 02 B 17/00 |
| G 02 B 17/06 |
| G 02 B 17/08 |
| G 02 B 13/06 |

Le présent rapport de recherche a été établi pour toutes les revendications

| Lieu de la recherche | Date d'achèvement de la recherche | Examinateur |
|---|---|---|
| LA HAYE | 16-11-1982 | PFAHLER R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82